# EUROPEAN PATENT SPECIFICATION

(11) **EP 0 458 123 B1**
(45) Date of publication and mention of the grant of the patent: **26.10.1994**
(21) Application number: 91107367.4
(22) Date of filing: 07.05.1991
(51) Int. Cl.: F16C 33/78

(54) **Seal device for bearings of motor vehicle wheel hubs**
Dichtungsvorrichtung für Radnabenlager von Motorfahrzeugen
Dispositif de joint pour paliers de moyeux de véhicules à moteur

(30) Priority: 24.05.1990 IT 6737990
(43) Date of publication of application: 27.11.1991
(73) Proprietor: SKF INDUSTRIE S.P.A., I-10123 Torino (IT)
(72) Inventor: Vignotto, Angelo, I-10134 Torino (IT)
(74) Representative: Lotti, Giorgio

(56) References cited:
- GB-A- 2 213 210
- US-A- 4 669 895

## Description

The present invention is referred to a seal device for vehicle hub bearings.

Recent generations of bearings, that are assembled on wheel hubs, allow very good operating performance, but are quite expensive, so they need to he provided with seals that guarantee a seal as safe as possible against the infiltration of external polluting agents such as water, dust, mud, to which the members on which the bearings are mounted, are constantly subject.

At the moment these seals, although they have two sealing lips, are designed in such a way that these lips wear out very quickly and/or do not ensure satisfying operating conditions at the inside of the bearing, as the lips are not always orientated correctly and pushing on the surface of the member on which they have to carry out the sealing action.

The rubber lips slide on a rotating counterface and their sealing action becomes less effective with time.

After a working phase, a depression due to the cooling takes place, and after a long time corrosion phenomena may occur on the rotating counterface, in the exact zone that is engaged by the sealing lips.

GB-A-2 213 210 discloses a sealed rolling bearing wherein a rubber seal having a reinforcement annular screen is fitted to one of the two bearing races and is made to sealingly slide on an opposite and substantially L-shaped annular sealing screen fixed on the other race of the bearing. The arrangement of the two annular screens determine therebetween an annular chamber having an opening on the outside of the bearing. A circumferential spring keeps the rubber seal engaging the L-shaped screen.

It is an object of the invention to overcome the aforesaid drawbacks by disclosing a device that:
- improves the seal both of the static type on the bearing's outer race and of the dynamic type (on the inner races);
- reduces the noxious effect that is due to the thermal variations which the parts that are in contact are subject to;
- causes a much longer life of the seal and consequently of the bearing itself, even in very hard working conditions.

For these and other purposes, that will be understood more clearly later on, the invention provides a seal device for vehicle wheel hub bearings, of the kind comprising a first screen provided with a seal and mounted on the stationary race of the bearing, and a second screen or centrifugal device mounted with the interposition of a rubber member on the rotating race of the bearing; the centrifugal device and the seal being forced to slide mutually and being positioned and shaped so as to determine a chamber open towards the outside of the bearing; characterized in that the rubber member, that is interposed between the centrifugal device and the inner race, has a sealing lip facing the outside of the bearing that slides on a toroidally shaped surface of the inner race.

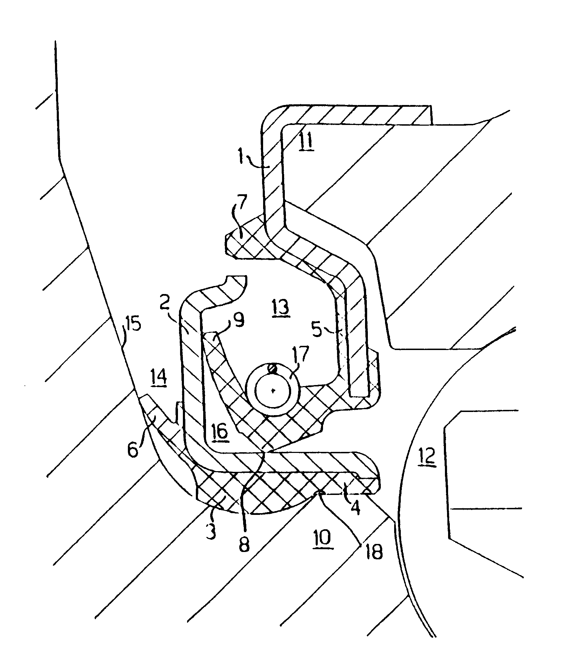

The device according to the invention is now going to be described referring to the enclosed drawing that shows a cross section of the device mounted on a bearing.

A wheel hub bearing comprises a rotating inner race 10, a non-rotating outer race 11 and two sets of balls 12, forming two circles, restrained by suitable cages and interposed between such races.

Members 10, 11 and 12 of the rolling bearing will not be described in detail as they are not the object of the present invention and are shown in the drawing with exemplifying shapes and dimensions.

A seal screen 1 is forcedly fitted on a suitable surface of the outer race 11.

A second screen or centrifugal device 2, preferably made of anticorrosive material (such as stainless steel or protected by special treatments such as zinc-plating, etc.) is fixed to the inner race 10 by a rubber member 3.

The top of the centrifugal device 2 bends towards the inside taking a conical shape that helps the centrifugal effect and forms in this way a labyrinth with the screen 1.

A sealing lip 6 and a cylindrical portion 4 extend from member 3; the cylindrical portion 4 guarantees the exact position of the bearing on the race.

A small grove 18 is located nearby the conjunction of the cylindrical portion 4 with the central member 3, so as to make the two zones of the compressed rubber independent.

Screen 1 is provided with a seal 5, preferably made of rubber, that extends downwards touching the centrifugating device with two lips; the main (radial) lip 8 is pushed by a spring 17, and the secondary lip 9 operates axially.

The seal 5 is further provided with a superior dust-covering lip 7 that tightens the opening of chamber 13 that is open towards the outside of the bearing; the opening is large enough to enable the external polluting agents to be kept inside and let out of chamber 13.

The spring 17 grasps the seal radially 5, ensuring contact between the main lip 8 and the centrifugating device 2.

The dust-covering lip 7 is shaped in such a way that it sends the polluting agents outside the bearing in a region 14 determined by the surface 15 of the inner race, by the centrifugal device 2 and by the lip 6.

The surface 15 of the inner race 10, on which lip 6 slides, has a toroidal shape so as to exploit the centrifugal effect that is generated during the rotation of the inner race 10, expelling the polluting agents from the inside of the bearing.

The lip 6 is meant to provide a further sealing effect, preventing polluting agents from getting close to the central rubber member 3.

In addition, in operation the centrifugal device 2 is heat insulated by member 3; this prevents the heat that is generated by the brake disk from being transmitted to the counterface 2.

The lip 9 is long and flexible so as to ensure a good sealing effect against the centrifugating device 2; in addition, it has a shape that keeps the grease inside the chamber 11, keeping the sealing lips lubricated.

## Claims

1. A seal device for vehicle wheel hub bearings, of the kind comprising a first screen (1) provided with a seal (5) and mounted on the stationary race (11) of the bearing, and a second screen or centrifugal device (2) mounted with the interposition of a rubber member (3) on the rotating race (10) of the bearing; the centrifugal device (2) and the seal (5) being forced to slide mutually and being positioned and shaped so as to determine a chamber (13) open towards the outside of the bearing; characterized in that the rubber member (3), that is interposed between the centrifugal device (2) and the inner race (10), has a sealing lip (6) facing the outside of the bearing that slides on a toroidally shaped surface (15) of the inner race (10).

2. A device according to claim 1, wherein the centrifugal device (2) is composed essentially by the union of three circular surfaces, of which one is cylindrical and disposed axially, one is flat and disposed radially, and one has a truncated-cone shape and is diverging towards the outer race (11).

3. A device according to claims 2 and 3, wherein the seal (5) that is attached to the first screen (1) is provided with a dust-covering lip (7) facing the truncated cone portion of the centrifugal device (2), with a main lip (8) sliding on the cylindrical surface of the centrifugal device (2) and with a further lip (9) sliding on the flat radial surface of the centrifugal device (2).

4. A device according to claim 1, characterized in that the rubber member (3) is provided with a cylindrical portion (4) near the inside of the bearing that seals against the inner race (10).

5. A device according to claims 1 and 4 wherein the rubber member (3) has a groove (18) in correspondence with the conjunction between its central portion and said cylindrical portion (4).

## Patentansprüche

1. Dichtungsvorrichtung für Fahrzeugradnabenlager des Typs, das eine erste Abdeckung (1) umfaßt, die mit einer Dichtung (5) versehen ist und auf dem Stationären Ring (11) des Lagers befestigt ist, und das eine zweite Abdeckung oder Fliehkraftvorrichtung (2) umfaßt, die mit einem dazwischenliegenden Gummielement (3) auf dem drehenden Ring (10) des Lagers befestigt wird; wobei die Fliehkraftvorrichtung (2) und die Dichtung (5) gezwungen sind gemeinsam zu gleiten und so positioniert und geformt sind, um eine Kammer (13) zu bestimmen, die nach außen hin gegenüber dem Lager geöffnet ist; dadurch gekennzeichnet, daß das Gummielement (3), das sich zwischen der Fliehkraftvorrichtung (2) und dem inneren Ring (10) befindet, eine Dichtlippe (6) aufweist, die die Außenseite des Lagers abdeckt, die auf einer toroidförmigen Oberfläche (15) des inneren Ringes (10) gleitet.

2. Dichtungsvorrichtung nach Anspruch 1, bei der die Fliehkraftvorrichtung (2) im wesentlichen durch die Vereinigung von drei kreisförmigen Flächen zusammengesetzt ist, von denen eine zylindrisch ist und axial angeordnet ist, eine eben ist und radial angeordnet ist und eine eine kegelstumpfförmige Form aufweist die in Richtung des äußeren Ringes (11) auseinanderläuft.

3. Dichtungsvorrichtung nach den Ansprüchen 2 und 3, bei der die Dichtung (5), die an die erste Abdeckung (1) angebracht ist, mit einer Staubschutzlippe (7) versehen ist, die den kegelstumpfförmigen Abschnitt der Fliehkraftvorrichtung (2) abdeckt, mit einer Hauptlippe (8) versehen ist, die auf der zylindrischen Oberfläche der Fliehkraftvorrichtung (2) gleitet und mit einer weiteren Lippe (9) versehen ist, die auf der ebenen radialen Fläche der Fliehkraftvorrichtung (2) gleitet.

4. Dichtungsvorrichtung nach Anspruch 1, dadurch gekennzeichnet, daß das Gummielement (3) in der Nähe der Innenseite des Lagers mit einem zylindrischen Abschnitt (4) versehen ist, der gegen den inneren Ring (10) abdichtet.

5. Dichtvorrichtung nach den Ansprüchen 1 und 4, bei der das Gummielement (3) eine Nut (18) aufweist, die mit der Verbindung zwischen dessen zentralen Abschnitt und dem zylindrischen Abschnitt (4) entspricht.

## Revendications

1. Dispositif d'étanchéité pour pallier de moyeu de roues de véhicule, du type comportant un premier écran (1) équipé d'un joint (5) et monté sur la bague fixe (11) du pallier, et un second écran ou dispositif centrifuge (2) monté par l'intermédiaire d'un organe en caoutchouc (3) sur la bague tournante (10) du pallier ; le dispositif centrifuge (2) et le joint (5) étant forcés à glisser l'un contre l'autre et étant agencés en forme et en position de manière à définir inne chambre (13) ouverte vers l'extérieur du pallier ; caractérisé en ce que l'organe en caoutchouc (3), qui est interposé entre le dispositif centrifuge (2) et la bague intérieure (10), comporte inne lèvre d'étanchéité (6) disposée en regard de l'extérieur du pallier qui glisse sur inne surface de forme toroïdale (15) de la bague intérieure (10).

2. Dispositif selon la revendication 1, caractérisé en ce que le dispositif centrifuge (2) est essentiellement constitué de l'assemblage de trois surfaces circulaires, dont inne est cylindrique et disposée axialement, inne est plate et disposée radialement, et inne est de forme tronconique et diverge en direction de la bague extérieure (11).

3. Dispositif selon la revendication 2, caractérisé en ce que le joint (5) qui est fixé au premier écran (1) est équipé d'une lèvre cache-poussière (7) disposée en regard de la portion tronconique du dispositif centrifuge (2), d'une lèvre principale (8) glissant sur la surface cylindrique du dispositif centrifuge (2) et d'une autre lèvre (9) glissant sur la surface radiale plane du dispositif centrifuge (2).

4. Dispositif selon la revendication 1, caractérisé en ce que l'organe en caoutchouc (3) est équipé d'une portion cylindrique (4) proche de l'intérieur du pallier qui est scellée contre la bague intérieure (10).

5. Dispositif selon la revendication 4, dans lequel l'organe en caoutchouc (3) comporte une rainure (18) qui correspond à l'intersection entre sa portion centrale et ladite portion cylindrique (4).
